# EUROPEAN PATENT SPECIFICATION

(11) **EP 2 324 712 B1**
(45) Date of publication and mention of the grant of the patent: **19.10.2016**
(21) Application number: 09176794.7
(22) Date of filing: 23.11.2009
(51) Int. Cl.: A21C 9/08

(54) **Device for transferring and rotating elongate dough pieces**
Vorrichtung zum Übertragen und Drehen länglicher Teigstreifen
Dispositif de transfert et de rotation de pièces de pâte allongées

(43) Date of publication of application: 25.05.2011
(73) Proprietor: Radie B.V., 4104 BC Culemborg (NL)
(72) Inventor: Van Blokland, Johannes, Josephus, Antonius, 4112 JH, Beusichem (NL)
(74) Representative: van Oeffelt, Abraham

(56) References cited:
- EP-A1- 1 021 955
- DD-A1- 234 359
- DE-A1- 2 641 211
- DE-A1- 3 012 289
- DE-A1-102005 016 765
- DE-C- 512 027
- DE-U1- 9 414 870
- DE-U1- 29 721 152
- FR-A- 683 167
- NL-C2- 1 024 823
- US-A- 2 704 177

## Description

The present invention relates to a device for transferring and rotating elongate dough pieces, in particular baguettes.

Such a device is known from document DE512027 which discloses in combination the features of the preamble of claim 1.

Transferring dough pieces is a common process during a baking process. Conveyors are used to bring the dough pieces from one processing step to a following processing step, for example from a baking step to a cutting step or a packaging step. During the conveyance, the dough pieces may have to be transferred because of the limited length of the conveyors used, or the direction of movement they have.

However, difficulties occur when there are specific requirements to the orientation or positioning of the dough pieces on the conveyor they have to be transferred to, or when the direction of the dough pieces has to become different, in another sense than the mutual difference of directions of the conveyors it is transferred between, for example when the conveyors are at a straight angle (90 degrees) and the dough should be arranged 30 or 45 or 60 degrees. Solutions are known where the dough is put in a clamping device, which then turns during conveyance, but these devices have the tendency to obtain play, with an impreciseness and damages of the device as a result.

The present invention has as its goal to provide a device to overcome the above problems of the state of the art, or to provide at least a useful alternative. It is a further goal of the present invention to provide a device for rotating a dough piece during transfer from a first conveyor to a second conveyor.

The invention thereto discloses a device for transferring and rotating elongate dough pieces in accordance with claim 1.

With the invention it is no longer necessary to rotate the dough piece while it is on a conveyor. This reduces the risk of damaging the dough piece, since an extra step performed on it is reduced. Moreover, the device can be integrated in the process at a location where the dough piece would have to be transferred from a first carrier to a second carrier already, for example when it is moved from a baking station to a cutting station or a packaging station. It is also no longer necessary to rotate the conveyor itself, since the conveyor according to the invention does not have to turn the dough piece, and it can therefor be kept in a fixed position.

The device according to the invention comprises a plurality of transfer devices, for transferring multiple dough pieces at a time. Thereto, the transfer devices, are coupled for synchronous movement. This can be a fixed coupling, but it is also possible that a plurality of transfer devices has a plurality of movement curves, wherein the coupling enables synchronous movement along several curves. Preferably, the curves have identical shapes that are on a mutual distance in space, so that dough pieces that are arranged for example parallel to each other before translation end up parallel to each other after translation, be it in another angle with respect to at least the direction of their transport. In that case, space on the first and second conveyor can be used efficiently.

In an alternative embodiment the device can be designed in such a way that the distance between the transfer devices (also known as the pitch) changes during the movement of the device. Thus the pitch at the receiving position is different to the pitch at the discharge position. The change in pitch is achieved by a set of levers that, due to their specific position and orientation relative to the main pivot points, automatically general an extra mutual movement of the transfer devices.

The device further comprises means for loading the dough pieces from the first conveyor and/or means for loading the dough pieces to the second conveyor. This can for example be pushing members or the first conveyor and/or the second conveyor may be inclinable to slide the dough pieces from the first conveyor to the transfer device or from the transfer device to the second conveyor. The transfer device can have the shape of a plate for example, or a gutter or groove, to avoid falling of the dough pieces during transfer.

The first conveyor may for example comprise a baking plate, and the second conveyor may for example comprise an endless belt, or a clamping device, for conveying the dough piece towards a cutting device. In this case the device is extra advantageous, since it takes the place of a transfer device that would already been necessary to transfer the dough pieces from the first conveyor (baking plate) to the second conveyor (endless belt with a clamping device thereon), so an extra processing step of rotating takes place at the same time.

The angle with respect to the first orientation may further be an angle with respect to the direction of conveyance of the dough piece, that is for example a length direction of the dough piece, for example a baguette, may differ from the direction of movement of the second conveyor. For example the dough pieces may be put diagonally on the second conveyor. This can be useful for further processing steps, for example a cutting operation, wherein diagonal cuts have to be made in the dough piece.

The transfer devices may be rotatable, preferably each with their own axis of rotation, so that the various dough pieces can be rotated in parallel, requiring only few space. The transfer device can thereto comprise a plurality of parallel branches, that all have their own rotation axis, and that they are coupled with common driving means, such as a driving rod. Each branch may be configured to comprise a plurality of dough pieces.

The device may be configured to put the dough pieces on the second conveyor under an angle between 0 and zero, but more particular of 30 - 60, and especially about 45 degrees. In the case of a baguette the angle determines the distance between the grooves to be cut in the baguette. The angle may even be adjustable for specific purposes.

The second conveyor may be arranged to stop during an unloading operation of the dough pieces onto the second conveyor, while running during a loading operation from the first conveyor, to avoid damage or movement of the dough piece when transferring it onto the second conveyor. During the loading of the dough pieces from the first conveyor, the second conveyor may convey the already transferred dough pieces to avoid unnecessary delays. If the unloading of the dough pieces from the transfer device can take place continuously the second conveyor may as well move uninterruptedly.

The invention will now be explained into more detail with reference to the following figures, wherein:
- Figure 1 shows a device for transferring and rotating a dough piece;
- Figure 2 shows the device from figure 1 in another perspective; and
- Figure 3 shows the device from figure 1 and 2 in yet another perspective.

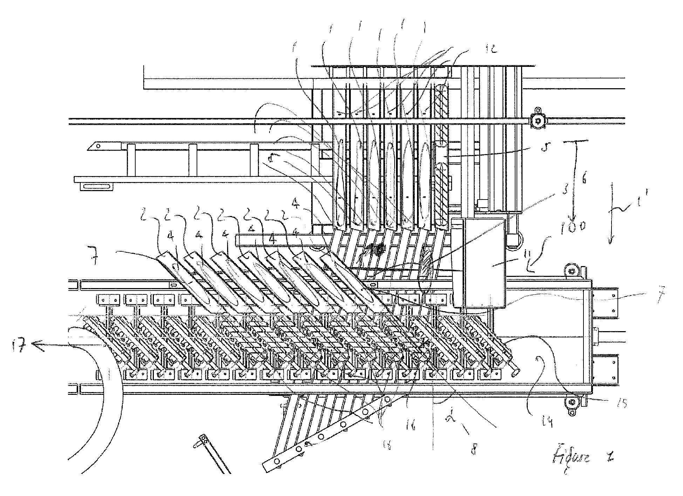

Figure 1 shows a device 100 for transferring and rotating an elongate dough piece 1, in particular a baguette, a plurality of transfer devices 2 for dough pieces 4, movable between a first orientation 3 wherein the transfer devices 2 are extending in a length direction 1' of the dough piece 1 on a first conveyor 5, for example a baking plate, for loading the dough piece 1 onto the transfer device 2 by a transversal movement according to the direction of the arrow 6, and a second orientation 7, at an angle 8 with respect to the first orientation 3, for unloading the dough piece onto a second conveyor 9, such that the dough piece 1 is at an angle 8 with respect to the first orientation. The transfer devices 2 are coupled for synchronous movement by a rod 10, which is driven by a drive 11. The device comprises means 12 for loading the dough pieces 1 from the first conveyor 5 and means 13 for loading the dough pieces to the second conveyor 14, that may comprise clamping means 14, arranged on a chain or an endless belt, for simultaneous movement. The angle 8 with respect to the first orientation is an angle with respect to the direction of conveyance 17. The transfer devices 2 are rotatable, and each have their own rotation centre or axis 18. In the depicted embodiment, each transfer device 2 is arranged to transfer one dough piece, but in another embodiment, a plurality of dough pieces may be loaded on one transfer device, which may therefor be longer. The dough pieces 16 are on the second conveyor 14 under an angle of 30 - 60 with its direction of movement 17, and in particular about 45 degrees. In an embodiment, the mutual distance or pitch of the transfer devices is adjustable, for example in dependence of the angle.

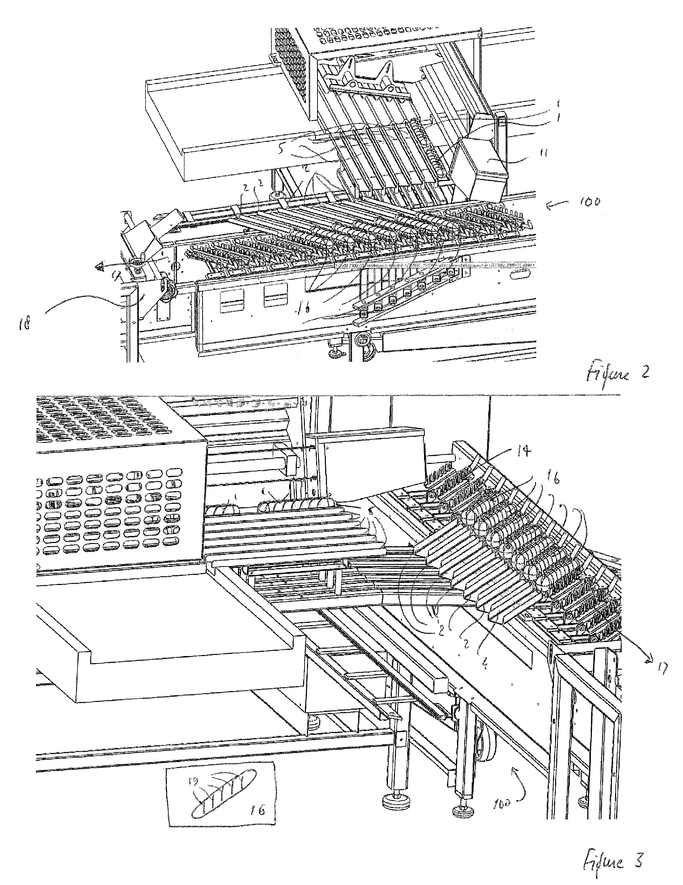

Figure 2 shows the device 100 from figure 1. In the figure, also a cutting device 18 is shown, for cutting the dough pieces 18 in a direction of movement of the second conveyor 14. Since the dough pieces are arranged in an angle with respect to the conveyor they will be cut in an angle as well, which may be the purpose of the device.

Figure 3 shows the device 100 from figures 1 and 2 in yet another perspective. From the figure it is clearly visible that the transfer devices 4 have a gutter- or groove-like shape. The figure further shows a baguette 16 with cuts 19, that may be obtained as a result of conveying the baguette 16 with the second conveyor 14 along a cutting machine in the direction 17.

## Claims

1. Device (100) for transferring and rotating elongate dough pieces, in particular a baguette, comprising:
- a first conveyor (5) for conveying the dough pieces in a direction of conveyance which is the length direction of the dough pieces;
- a second conveyor (9);
**characterised by**;
- a plurality of transfer devices (2) for the dough piece, each transfer device:
• having the shape of a plate, a gutter or a groove;
• mounted in the device so as to be moveable between:
• a first orientation wherein the transfer device (2) is extending in a length direction of the dough piece on the first conveyor(5), for loading the dough piece onto the transfer device (2) by a translational movement; and
• a second orientation, at an angle with respect to the first orientation, for unloading the dough piece onto a second conveyor (9), such that the dough piece is at an angle with respect to the first orientation;
wherein the transfer devices (2) are coupled for synchronous movement.

2. Device (100) according to claim 1, comprising means for loading the dough pieces from the first conveyor (5) and/or means for loading the dough pieces to the second conveyor (9).

3. Device (100) according to any of the preceding claims, wherein:
- the first conveyor (5) comprises a baking plate, and
- the second conveyor (9) comprises an endless belt.

4. Device (100) according to any of the preceding claims, wherein the transfer devices (2) are rotatable.

5. Device (100) according to claim 4, wherein the transfer devices (2) each have their own rotation centre or axis.

6. Device (100) according to any of the preceding claims, wherein the transfer devices (2) comprises a plurality of parallel branches.

7. Device (100) according to claim 6, wherein each branch is configured to comprise a plurality of dough pieces.

8. Device (100) according to any of the preceding claims, configured to put the dough pieces on the second conveyor (9) under an angle of 30 - 60, and in particular about 45 degrees.

9. Device (100) according to any of the preceding claims 2-8, wherein the second conveyor (9) is arranged to stop during an unloading operation of the dough pieces onto the second conveyor (9), and to run during a loading operation from the first conveyor (5).

10. Device (100) according to any of the preceding claims, wherein a mutual distance or pitch of the transfer devices (2) is adjustable, for example in dependence of the angle.

## Patentansprüche

1. Vorrichtung (100) zum Übertragen und Drehen länglicher Teigstreifen, insbesondere eines Baguettes, umfassend:
- ein erstes Fördermittel (5) zum Transportieren der Teigstreifen in eine Förderrichtung, bei der es sich um die Längenrichtung der Teigstreifen handelt;
- ein zweites Fördermittel (9);
**gekennzeichnet durch**:
- eine Vielzahl von Übertragungsvorrichtungen (2) für den Teigstreifen, wobei jede Übertragungsvorrichtung:
- die Form einer Platte, einer Rinne oder einer Nut aufweist;
- so in der Vorrichtung angebracht ist, dass sie bewegbar ist zwischen:
- einer ersten Orientierung, in der sich die Übertragungsvorrichtung (2) in eine Längenrichtung des Teigstreifens auf dem ersten Fördermittel (5) erstreckt, um den Teigstreifen durch eine Translationsbewegung auf die Übertragungsvorrichtung (2) zu laden;
und
- einer zweiten Orientierung in einem Winkel bezüglich der ersten Orientierung, um den Teigstreifen auf ein zweites Fördermittel (9) zu entladen, so dass der Teigstreifen in einem Winkel bezüglich der ersten Orientierung liegt;
wobei die Übertragungsvorrichtungen (2) für synchrone Bewegung gekoppelt sind.

2. Vorrichtung (100) nach Anspruch 1, umfassend Mittel zum Laden der Teigstreifen vom ersten Fördermittel (5) und/oder Mittel zum Laden der Teigstreifen zum zweiten Fördermittel (9).

3. Vorrichtung (100) nach einem der vorhergehenden Ansprüche, wobei:
- das erste Fördermittel (5) eine Backplatte umfasst, und
- das zweite Fördermittel (9) ein Endlosband umfasst.

4. Vorrichtung (100) nach einem der vorhergehenden Ansprüche, wobei die Übertragungsvorrichtungen (2) drehbar sind.

5. Vorrichtung (100) nach Anspruch 4, wobei die Übertragungsvorrichtungen (2) jeweils ihr eigenes Drehzentrum oder ihre eigene Drehachse aufweisen.

6. Vorrichtung (100) nach einem der vorhergehenden Ansprüche, wobei die Übertragungsvorrichtungen (2) eine Vielzahl von parallelen Verzweigungen umfassen.

7. Vorrichtung (100) nach Anspruch 6, wobei jede Verzweigung ausgelegt ist, eine Vielzahl von Teigstreifen zu umfassen.

8. Vorrichtung (100) nach einem der vorhergehenden Ansprüche, die ausgelegt ist, die Teigstreifen in einem Winkel von 30-60 und insbesondere von ungefähr 45 Grad auf das zweite Fördermittel (9) zu legen.

9. Vorrichtung (100) nach einem der vorhergehenden Ansprüche 2-8, wobei das zweite Fördermittel (9) dazu angeordnet ist, während eines Entladevorgangs der Teigstreifen auf das zweite Fördermittel (9) anzuhalten und während eines Ladevorgangs vom ersten Fördermittel (5) zu laufen.

10. Vorrichtung (100) nach einem der vorhergehenden Ansprüche, wobei ein gegenseitiger Abstand oder Zwischenraum der Übertragungsvorrichtungen (2) verstellbar ist, beispielsweise in Abhängigkeit vom Winkel.

## Revendications

1. Dispositif (100) pour transférer et faire tourner des pièces de pâte allongées, en particulier une baguette, comprenant:
- un premier convoyeur (5) pour transporter les pièces de pâte dans une direction de transport qui est le sens de la longueur des pièces de pâte;
- un second convoyeur (9) ;
**caractérisé par**:
- une pluralité de dispositifs de transfert (2) pour la pièce de pâte, chaque dispositif de transfert:
- ayant la forme d'une plaque, d'une gouttière ou d'une rainure,
- étant montée dans le dispositif de manière à être mobile entre:
- une première orientation dans laquelle le dispositif de transfert (2) s'étend dans le sens de la longueur de la pièce de pâte sur le premier convoyeur (5), afin de charger la pièce de pâte sur le dispositif de transfert (2) par un mouvement de translation; et
- une deuxième orientation, orientée selon un certain angle par rapport à la première orientation, afin de décharger la pièce de pâte sur un second convoyeur (9), de telle sorte que la pièce de pâte soit disposée selon un certain angle par rapport à la première orientation,
dans lequel les dispositifs de transfert (2) sont couplés de manière à exécuter un déplacement synchronisé.

2. Dispositif (100) selon la revendication 1, comprenant des moyens pour charger les pièces de pâte à partir du premier convoyeur (5) et/ou des moyens pour charger les pièces de pâte sur le second convoyeur (9).

3. Dispositif (100) selon l'une quelconque des revendications précédentes, dans lequel:
- le premier convoyeur (5) comprend une plaque de cuisson, et
- le second convoyeur (9) comprend une courroie sans fin.

4. Dispositif (100) selon l'une quelconque des revendications précédentes, dans lequel les dispositifs de transfert (2) sont rotatifs.

5. Dispositif (100) selon la revendication 4, dans lequel les dispositifs de transfert (2) présentent chacun leur propre centre ou axe de rotation.

6. Dispositif (100) selon l'une quelconque des revendications précédentes, dans lequel les dispositifs de transfert (2) comprennent une pluralité de branches parallèles.

7. Dispositif (100) selon la revendication 6, dans lequel chaque branche est configurée de manière à comprendre une pluralité de pièces de pâte.

8. Dispositif (100) selon l'une quelconque des revendications précédentes, configuré de manière à disposer les pièces de pâte sur le second convoyeur (9) selon un angle compris entre 30° et 60°, et en particulier d'environ 45 degrés.

9. Dispositif (100) selon l'une quelconque des revendications précédentes 2 à 8, dans lequel le second convoyeur (9) est agencé de manière à s'arrêter pendant une opération de déchargement des pièces de pâte sur le second convoyeur (9) et à fonctionner pendant une opération de chargement à partir du premier convoyeur (5).

10. Dispositif (100) selon l'une quelconque des revendications précédentes, dans lequel une distance ou un pas mutuel(le) des dispositifs de transfert (2) est réglable, par exemple en fonction de l'angle.
